# EUROPÄISCHE PATENTANMELDUNG

(11) **EP 0 678 559 A1**
(43) Veröffentlichungstag der Anmeldung: **25.10.1995**
(21) Anmeldenummer: 95105175.4
(22) Anmeldetag: 06.04.1995
(51) Int. Cl.: C09B 67/14, C09D 7/12

(54) **Feinverteilungsverfahren zur Herstellung von organischen Pigmenten**

(30) Priorität: 21.04.1994 DE 4413849
(71) Anmelder: HOECHST AKTIENGESELLSCHAFT, D-65929 Frankfurt am Main (DE)
(72) Erfinder: Urban, Manfred, D-65205 Wiesbaden (DE)

(57) **Zusammenfassung**

Organische polycyclische Rohpigmente werden in ökologisch und ökonomisch vorteilhafter Weise feinverteilt, indem man grobkristalline Rohpigmente zunächst einer Trockenmahlung unterwirft und die dabei erhaltenen feinteiligen Präpigmente in wäßriger Suspension auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner oder gleich 1 mm naßvermahlt.

Auf diese Weise hergestellte Pigmente eignen sich besonders als Farbmittel zum Pigmentieren von Lacken, Druckfarben und Kunststoffen.

## Beschreibung

Die vorliegende Erfindung betrifft ein umweltfreundliches und wirtschaftliches Verfahren zur Feinverteilung von organischen Pigmenten.

Voraussetzung für den technischen Einsatz von organischen Pigmenten ist ihre optimale Verteilung in den entsprechenden Anwendungsmedien. Die Pigmente müssen leicht dispergierbar sein und farbstarke Färbungen liefern. Diese Forderung ist um so schwerer zu erfüllen, je transparenter ein Pigment ist. Besonders schwierig ist es, in Kunststoffen leicht dispergierbare Pigmente herzustellen. Die Dispergierung wird erleichtert, wenn die bei der Feinverteilung oder bei der Dispergierung auf die Pigmente aufgebrachten Additive mit dem Kunststoff gut verträglich sind.

Organische Pigmente fallen je nach Syntheseweg bei ihrer Herstellung in grobkristalliner oder feinteiliger Form an. Die bei der Synthese grobkristallin anfallenden Rohpigmente müssen vor ihrem Einsatz feinverteilt werden. Solche Feinverteilungsprozesse sind beispielsweise Roll- oder Schwingmahlungen, die naß oder trocken ausgeführt werden können, Knetungen, Umküpungen und Umfällungen aus Schwefelsäure oder Polyphosphorsäure. Auch Kombinationen dieser Verfahren werden beschrieben. Das technisch wichtigste Verfahren ist die Trockenmahlung mit Salz.

Um eine optimale Anwendbarkeit zu erzielen, werden die nach der Feinverteilung vorliegenden Präpigmente durch zusätzliche Behandlungsverfahren, wie z.B. Nachbehandlung mit Wasser, Lösemitteln oder verdünnten Säuren und Laugen, in die Pigmentform überführt. Diese Verfahren werden im allgemeinen als Finish bezeichnet. Es ist auch möglich, durch mechanische Behandlung die Anwendbarkeit zu verbessern.

Die bislang übliche Überführung der grobkristallinen Rohpigmente in die Pigmentform ist in den nachfolgend aufgeführten Trocken- und Naßmahlverfahren beschrieben.

Die EP-A-0 408 499 beschreibt ein Verfahren zur Konditionierung von organischen Pigmenten durch Trockenmahlung der grobkristallinen Rohpigmente mit Salzzusatz oder Naßmahlung der grobkristallinen Rohpigmente ohne Salzzusatz, jeweils in Gegenwart von mikronisierten Wachsen. Im Falle der Trockenmahlung mit Salzzusatz fallen große Mengen Salz im Abwasser an, weshalb diese Arbeitsweise teuer und ökologisch bedenklich ist. Unter den angegebenen Bedingungen der Naßmahlung können jedoch keine transparenten und farbstarken Pigmente für den Kunststoffsektor aus hochkristallinen Rohpigmenten hergestellt werden.

Die EP-A-0 069 396 beschreibt die Herstellung von Pigmentzubereitungen auf Basis von Chinacridonpigmenten durch Trockenmahlung von grobkristallinen Rohpigmenten und anschließende Naßmahlung der erhaltenen Mahlgüter in Aceton. Die großen Mengen Lösemittel, insbesondere Aceton, die wieder aufbereitet werden müssen, machen das Verfahren unwirtschaftlich. Wegen des niedrigen Siedepunktes des verwendeten Lösemittels sind aufwendige Apparaturen zur Regeneration erforderlich.

Die US-PS 4 548 968 beschreibt die Herstellung von geharzten Chinacridonpigmenten durch Trockenmahlung der grobkristallinen Rohpigmente unter Zusatz von Harzen und geringen Mengen anorganischer Salze und anschließende Naßmahlung der Mahlgüter in wäßrig-alkalischem Medium. Hierbei fallen Salze und Alkalilaugen im Abwasser an, die wieder aufbereitet werden müssen.

Die EP-A-0 176 899 beschreibt die Trockenmahlung von grobkristallinen Rohpigmenten in Gegenwart von anorganischen Salzen, die als Mahlhilfsmittel zugesetzt werden. Die Salze werden nach der Mahlung durch wäßrigen Auszug entfernt. Die hierbei anfallenden großen Mengen verdünnter salzhaltiger Abwässer, die wieder aufbereitet werden müssen, machen das Verfahren unwirtschaftlich.

Die DE-A-1 914 208 beschreibt ein Verfahren zur Herstellung von hochtransparenten Perylenpigmenten durch Salzvermahlung der Rohpigmente in Gegenwart von Fettalkoholen, die nach dem Salzauszug im Pigment verbleiben. Aus den vorstehend genannten Gründen ist auch dieses Verfahren unwirtschaftlich.

Die EP-A-0 504 423 beschreibt ein Naßmahlverfahren zur Herstellung von Pigmentzubereitungen auf Basis von C.I. Pigment Violet 23. An die Mahlung schließt sich ein Lösemittelfinish an. Hierbei werden große Mengen organischer Lösemittel eingesetzt, die in aufwendigen Apparaturen regeneriert werden müssen. Aus diesem Grund ist dieses Verfahren teuer.

Die Verwendung von Wachsen zur Verbesserung der anwendungstechnischen Eigenschaften in Kunststoffen ist in der DE-A-2 049 225 beschrieben. Die Herstellung von leicht verteilbaren Pigmenten für den Einsatz in thermoplastischen Kunststoffen erfolgt durch Mischen der Pigmente mit Wachsdispersionen in Mischern oder Kollermühlen.

In der EP-A-0 574 792 wird ein Verfahren zur Herstellung von Kupferphthalocyaninpigmentzubereitungen der α-Phase beschrieben, die unter Phasenumwandlung aus Kupferphthalocyaninrohpigmenten der β-Phase hergestellt werden, indem man unter Verzicht auf einen Trockenmahlungsschritt eine Naßmahlung der genannten β-Modifikation vornimmt. Ein ähnliches Verfahren ist in der EP-A-0 574 790 beschrieben, wobei jedoch unter phasenerhaltenden Bedingungen gearbeitet wird. Aus den beiden genannten Verfahren resultieren jedoch Phthalocyaninpigmente, die hinsichtlich ihrer Farbstärke und Dispergierbarkeit in Kunststoffen noch zu wünschen übrig lassen.

Verfahren, nach denen transparente, farbstarke und hervorragend dispergierbare organische Pigmente für den Einsatz in Kunststoffen umweltfreundlich, ohne Anfall von belasteten Abwässern und ohne den Einsatz aufwendiger Finishapparaturen zur Lösemittelbehandlung und -regeneration hergestellt werden können, sind bisher nicht bekannt.

Aufgabe der vorliegenden Erfindung war es, ein Verfahren zur Feinverteilung von polycyclischen organischen Rohpigmenten zur Verfügung zu stellen, das insbesondere die ökologischen und ökonomischen Nachteile von bereits bekannten Feinverteilungsverfahren für organische Rohpigmente vermeidet und gute anwendungstechnische Eigenschaften dieser organischen Pigmente insbesondere in Kunststoffen liefert.

Es wurde überraschenderweise gefunden, daß man farbstarke und leicht dispergierbare organische Pigmente wirtschaftlich und umweltfreundlich herstellen kann, wenn man die bei der Synthese oder bei der Reinigung grobkristallin anfallenden Rohpigmente, gegebenenfalls in Gegenwart von Mahlhilfsmitteln, trocken vermahlt und die dabei erhaltenen feinteiligen, meist stark agglomerierten Präpigmente einer wäßrigen Naßmahlung unterwirft und danach isoliert.

Gegenstand der vorliegenden Erfindung ist ein Verfahren zur Feinverteilung von polycyclischen organischen Rohpigmenten, dadurch gekennzeichnet, daß man die grobkristallinen Rohpigmente zunächst einer Trockenmahlung unterwirft und die dabei erhaltenen feinteiligen Präpigmente in wäßriger Suspension auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner oder gleich 1 mm naßvermahlt.

Für das erfindungsgemäße Verfahren kommen alle die bei der Synthese grobkristallin anfallenden polycyclischen organischen Rohpigmente in Betracht, beispielsweise die Rohpigmente aus der Reihe der Dioxazine, Perylene und Chinacridone. Es können auch Mischungen dieser Rohpigmente und Mischkristallrohpigmente auf der Basis dieser Rohpigmente eingesetzt werden. Beispiele der genannten Rohpigmente sind Carbazolviolett (Pigment Violet 23), Perylentetracarbonsäurediimid (Pigment Brown 26), Perylentetracarbonsäuredianhydrid (Pigment Red 224),Perylentetracarbonsäure- bis-4'-ethoxy-phenylimid (Pigment Red 123),Perylentetracarbonsäure-bis-3',5'- dimethyl-phenylimid (Pigment Red 149), Perylentetracarbonsäure-bis-4'-phenylazophenylimid (Pigment Red 178), Perylentetracarbonsäure-bis-4'-chlor-phenylimid (Pigment Red 32), unsubstituierte Chinacridone (Pigment Violet 19, β- und γ-Phase), 2,9-Dimethylchinacridon (Pigment Red 122), 2,9-Dichlorchinacridon (Pigment Red 202), 4,11-Dichlorchinacridon, 1 ,8-Dichlorchinacridon und 1,10-Dichlorchinacridon.

In einer bevorzugten Ausführungsform des erfindungsgemäßen Verfahrens wird vor der Trockenmahlung mindestens eines der nachstehend genannten Additive als Mahlhilfsmittel zugesetzt, vorzugsweise ein oberflächenaktives Mittel und/oder Wachs.

Als oberflächenaktive Mittel kommen anionaktive, kationaktive und nichtionogene Tenside in Betracht.

Als anionaktive oberflächenaktive Mittel kommen Fettsäuretauride, Fettsäure-N-methyltauride, Fettsäureisethionate, Alkylbenzolsulfonate, Alkylnaphthalinsulfonate, Alkylphenolpolyglykolethersulfate und Fettalkoholpolyglykolethersulfate, Fettsäuren, z.B. Palmitin-, Stearin- und Ölsäure, Seifen, z.B. Alkalisalze von Fettsäuren, Naphthensäuren und Harzsäuren, z.B. Abietinsäure, sowie alkalilösliche Harze, z.B. kolophoniummodifizierte Maleinatharze in Betracht.

Als kationaktive oberflächenaktive Mittel kommen quaternäre Ammoniumsalze, Fettaminoxethylate, Fettaminopolyglykolether und Fettamine in Betracht.

Als nichtionogene oberflächenaktive Mittel kommen Fettalkoholpolyglykolether, Fettsäurepolyglykolester und Alkylphenolpolyglykolether in Betracht.

Aus der Vielzahl der Wachse sind z.B. Säurewachse, Esterwachse, Amidwachse, Kohlenwasserstoffwachse und Polyolefinwachse zu nennen.

Besonders bevorzugt sind nichtionogene oberflächenaktive Mittel und Polyolefinwachse. Es können auch Mischungen der genannten Additive eingesetzt werden. Die Additive können nach der Mahlung im Pigment verbleiben. Die Zugabe der Additive kann auf einmal oder in mehreren Portionen erfolgen. Die Menge der eingesetzten Additive beträgt zweckmäßigerweise 0,1 bis 10 Gew.-%, besonders bevorzugt 2,5 bis 7,5 Gew.-%, bezogen auf das eingesetzte Rohpigment.

Die Trockenmahlung erfolgt in einer diskontinuierlichen oder kontinuierlichen Schwing- oder Rollmühle unter milden nachstehend definierten Mahlbedingungen und bevorzugt bei niedrigem Mahlgutfüllgrad. Der Mahlgutfüllgrad wird definiert als das Verhältnis der Mahlgutmenge (Rohpigment und gegebenenfalls Additiv) zum freien Volumen der Mahlkörperschüttung (nur die Mahlkörper). Der Mahlgutfüllgrad liegt normalerweise bei weniger als 250 g Mahlgut pro Liter freiem Volumen der Mahlkörperschüttung, vorzugsweise bei 50 bis 150 g/l. Der Mahlgutfüllgrad kann auch höher liegen, jedoch können dann technische Probleme auftreten, und in vielen Fällen wird das coloristische Ziel nicht erreicht.

Die Mahlung in der Schwingmühle erfolgt in der Weise, daß die Mahlkörper im wesentlichen nur rotierende Bewegungen ausführen und ihre kinetische Energie durch die Auswahl von Masse und Größe sowie durch Drehzahl (Frequenz) und Amplitude möglichst klein gehalten wird. Außerdem wird die Mühle mit einem hohen Anteil an Mahlkörpern betrieben. Der Mahlkörperfüllgrad, definiert als das Verhältnis des Volumens der Mahlkörperschüttung zum Mühlenvolumen, liegt bei mehr als 60 Vol.-%.

Die Rollmahlung wird bei einem Mahlkörperfüllgrad von 40 bis 60 Vol.-% und mit 65 bis 75 % der kritischen Drehzahl durchgeführt. Durch die Auswahl von Masse und Größe der Mahlkörper wird die kinetische Energie möglichst klein gehalten. Auch hier wird die Mühle vorzugsweise mit niedrigem Mahlgutfüllgrad betrieben.

Als Mahlkörper dienen Kugeln oder Zylinder aus Stahl, Korund, Porzellan, Steatit, Aluminiumoxid, Mischoxiden und Quarz mit einem Durchmesser von 3 bis 20 mm. Die genannten Mahlkörper haben bevorzugt eine glatte porenfreie Oberfläche. Die Mahltemperatur liegt im allgemeinen unter 100⁰C. Die Mahldauer ist abhängig von den Feinheitsanforderungen an das Pigment. Die Verweilzeit des Mahlguts in der Schwingmühle liegt je nach geforderter Feinheit im allgemeinen zwischen 1 und 25 Stunden. Zweckmäßig erweist sich eine Dauer von 1 bis 15 Stunden, vorzugsweise 2 bis 8 Stunden. Die Verweilzeit des Mahlguts in der Rollmühle liegt je nach geforderter Feinheit im allgemeinen zwischen 5 und 100 Stunden. Zweckmäßig erweist sich eine Dauer von 10 bis 30 Stunden, vorzugsweise 15 bis 25 Stunden.

Das Mahlgut kann neben den vorstehend erwähnten Komponenten noch weitere übliche Zusatzstoffe, beispielsweise geringe (bis zu 5 Gew.-% Mengen Wasser, Pigmentdispergatoren auf Basis von Pigmenten, Harze, Salze von Harzen und Extender enthalten. Die Zusatzstoffe und/oder Additive können auch in emulgierter, suspendierter und flüssiger Form eingesetzt werden, da pulverförmige Stoffe geringe Mengen (bis ca. 5 Gew.-%) an Flüssigkeit aufnehmen können, ohne sofort ihre Eigenschaft als pulverförmige Substanz zu verlieren. Zur Herabsetzung der Gefahr einer Staubexplosion können geringe Mengen anorganischer Salze zugesetzt werden. Besonders vorteilhaft ist es, Zusatzstoffe zu verwenden, die nach der Mahlung im Pigment verbleiben können. Die Salze der Fettsäuren und Harze können nach der Mahlung in die freien Säuren oder Harze überführt werden.

Die Zugabe der Zusatzstoffe kann vor, während oder nach der Trockenmahlung, aber auch während oder nach der Naßmahlung, während oder nach der Isolierung, im letztgenannten Fall auch durch trockenes Mischen, vorgenommen werden. Der am besten geeignete Zeitpunkt muß zuvor durch orientierende Versuche ermittelt werden.

Da bei der Trockenmahlung, auch in Gegenwart von Mahlhilfsmitteln, neben der angestrebten Zerkleinerung der grobkristallinen Rohpigmentteilchen noch Agglomerationsvorgänge ablaufen, schließt sich an die Trockenmahlung noch eine Naßmahlung zur Dispergierung des agglomerierten Mahlguts an.

Für die Naßmahlung eignen sich alle diskontinuierlichen und kontinuierlichen Rührwerkskugelmühlen. Hierbei ist eine hohe Mahlwirkung erforderlich. Diese wird erreicht durch den Einsatz einer speziellen Ausführungsform der Rührwerkskugelmühle. Für eine Mahlung der gesuchten Effizienz sind besonders Rührwerkskugelmühlen geeignet, die zum diskontinuierlichen und kontinuierlichen Arbeitsablauf ausgelegt sind, einen zylinderförmigen oder hohlzylinderförmigen Mahlraum in horizontaler oder vertikaler Bauweise enthalten und mit einer spezifischen Leistungsdichte von über 2,5 kW pro Liter Mahlraum betrieben werden können und deren Rührwerksumfangsgeschwindigkeit mehr als 12 m/s beträgt.

Derartige Mühlen sind beispielsweise in der DE-A-3 716 587 (US-PS 5 062 577) beschrieben. Die pro Zeiteinheit vom Rührwerk abgegebene Energie wird als Zerkleinerungsarbeit und als Reibungsenergie in Form von Wärme an das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Wenn bei hohen Durchsätzen im Kreislauf gemahlen wird, kann die Wärme überwiegend über das Mahlgut nach außen abgeführt werden. Als Mahlkörper dienen beispielsweise Kugeln aus Zirkonoxid, Zirkonmischoxid, Aluminiumoxid oder Quarz mit einem Durchmesser kleiner als 1 mm; zweckmäßig werden Mahlkörper mit einem Durchmesser von 0,2 bis 0,8 mm, vorzugsweise 0,3 bis 0,5 mm, verwendet.

Beim Einsatz von kontinuierlichen Rührwerkskugelmühlen zum Dispergieren erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen der Trennvorrichtungen weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Zur Ermittlung der geeigneten Mahlbedingungen sind Vorversuche notwendig. Die Mahlung wird im wäßrigen Medium durchgeführt, vorzugsweise im neutralen pH-Bereich (pH 6 bis 8).

Die Pigmentkonzentration im Mahlgut der Naßmahlung ist abhängig von der Rheologie der Suspension und beträgt zweckmäßigerweise höchstens 40 Gew.-%, vorzugsweise 5 bis 35 Gew.-%, insbesondere 10 bis 20 Gew.-%, der Mahlgutsuspension.

Die Naßmahlung wird bei Temperaturen im Bereich von 0 bis 100°C, zweckmäßig bei einer Temperatur zwischen 10 und 60°C, vorzugsweise bei 20 bis 50°C, durchgeführt. Die Dauer der Naßmahlung ist abhängig von den Feinheitsanforderungen an das Pigment. Die Verweilzeit des Mahlguts in der Rührwerkskugelmühle liegt je nach geforderter Feinheit im allgemeinen zwischen 5 und 60 Minuten. Zweckmäßig erweist sich eine Dauer von 5 bis 45 Minuten, vorzugsweise 10 bis 30 Minuten.

Die nach der Naßmahlung vorliegenden feinteiligen Pigmente werden isoliert. Unter Isolieren wird das Filtrieren und Waschen des Preßkuchens sowie anschließendes Trocknen des Pigments verstanden. Durch die Wahl des Additivs und des Zusatzsstoffes, deren Konzentrationen und der Auswahl der Mahlbedingungen lassen sich je nach dem gewünschten Verwendungszweck Pigmente herstellen, die entweder eine höhere Transparenz oder eine bessere Deckkraft besitzen. Die so hergestellten Pigmente eignen sich zur Pigmentierung von Kunststoffen, Lacken und Druckfarben.

Die Herstellung von Pigmenten nach dem erfindungsgemäßen Verfahren hat sich als besonders wirtschaftlich sowie umweltfreundlich erwiesen, weil bei der Feinverteilung der Rohpigmente durch salzfreie Trockenmahlung und anschließende wäßrige Naßmahlung keine Verschmutzung der Abwässer durch Salze auftritt. Da nur in Wasser gemahlen wird und eine nachträgliche Finishbehandlung in Lösemitteln nicht notwendig ist, sind keine aufwendigen Apparaturen für die Lösemittelbehandlung und -regeneration erforderlich.

Die nach der vorliegenden Erfindung erhältlichen Pigmente zeichnen sich aus durch ihre hervorragenden coloristischen Eigenschaften, insbesondere der Dispergierbarkeit, Transparenz, Farbstärke und Farbtonreinheit. Die erfindungsgemäß hergestellten Pigmente lassen sich zum Pigmentieren von hochmolekularen organischen Materialien natürlicher oder synthetischer Herkunft einsetzen und sind leicht und bis zu hohen Feinheiten dispergierbar: Hochmolekulare organische Materialien, die mit den genannten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Verschnitte oder in Form von Präparationen oder Dispersionen zu benutzen. Bezogen auf das zu pigmentierende hochmolekulare organische Material setzt man die erfindungsgemäß hergestellten Pigmentzubereitungen in einer Menge von 0,1 bis 10 Gew.-% ein.

Zur Beurteilung der Eigenschaften der nach der vorliegenden Erfindung hergestellten Pigmente auf dem Kunststoffgebiet wurde aus der Vielzahl der bekannten Kunststoffe Weichpolyvinylchlorid (PVC) und Niederdruckpolyethylen (PE) ausgewählt. Die Bestimmung der Hitzebeständigkeit erfolgte gemäß DIN 53772-A.
Die Bestimmung der Ausblutechtheit erfolgte nach DIN 53775.

Zur Beurteilung der Eigenschaften der erfindungsgemäß hergestellten Pigmente auf dem Lacksektor wurden aus der Vielzahl der bekannten Lacke ein aromatenhaltiger Alkydmelaminharzlack (AM) auf Basis eines mittelöligen, nichttrocknenden Alkydharzes aus synthetischen Fettsäuren und Phthalsäureanhydrid sowie eines butanolveretherten Melaminharzes und Anteilen eines nichttrocknenden Alkydharzes auf Basis von Ricinussäure (kurzölig) und ein High-Solid-Acrylharzeinbrennlack auf Basis einer nicht-wäßrigen Dispersion (HSS) ausgewählt.

Die Bestimmung der Farbstärke und des Farbtons erfolgte nach DIN 55986. Die Rheologie des Mahlguts nach der Dispergierung (Millbase-Rheologie) wurde anhand der folgenden fünfstufigen Skala bewertet:
5 dünnflüssig
4 flüssig
3 dickflüssig
2 leicht gestockt
1 gestockt
Nach dem Verdünnen des Mahlguts auf die Pigmentendkonzentration wurde die Viskosität mit dem Viskospatel nach Rossmann, Typ 301 der Firma Erichsen, Iserlohn, beurteilt.
Glanzmessungen erfolgten an Folienaufgüssen unter einem Winkel von 20 ° nach DIN 67 530 (ASTMD 523) mit dem multigloss"-Glanzmeßgerät der Firma Byk-Mallinckrodt, Wesel.

Die Bestimmung der Kristallphase der Rohpigmente, Präpigmente, Pigmente, Mischkristallpigmente und Pigmentzubereitungen erfolgte durch Röntgenspektroskopie. Die Aufnahme der Röntgenspektren wurde mit CuKα-Strahlung durchgeführt. In den nachstehenden Beispielen beziehen sich Teile jeweils auf Gewichtsteile und Prozente jeweils auf Gewichtsprozente der beschriebenen Substanzen.

### Beispiel 1:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 19, C.I. No. 46500, β-Phase, hergestellt gemäß US-PS 2 969 366) und 1,5 Teile Polyolefinwachs (Fp: 104°C, Molmasse ca. 2000) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,8 Teile Pigment (β-Phase, mit Spuren α-Phase), das im Kunststoff (PVC) sehr gut dispergierbar ist und transparente und farbstarke Färbungen mit einwandfreier Ausblutechtheit liefert.

### Beispiel 2:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 19, C.I. No. 46500, β-Phase, hergestellt gemäß US-PS 2 969 366) und 1,5 Teile oberflächenaktives Mittel (Fettsäurepolyglykolester, auf Basis von Ölsäure, verestert mit 6 Mol Ethylenoxid) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,8 Teile Pigment (β-Phase, mit Spuren α-Phase), das im Kunststoff (PVC) sehr gut dispergierbar ist und transparente und farbstarke Färbungen mit einwandfreier Ausblutechtheit liefert.

### Beispiel 3:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 19, C.I. No. 46500, β-Phase, hergestellt gemäß US-PS 2 969 366), 1,5 Teile Polyolefinwachs (Fp: 104°C, Molmasse ca. 2000) und 1,5 Teile oberflächenaktives Mittel (Fettsäurepolykotester, auf Basis von Ölsäure, verestert mit 6 Mol Ethylenoxid) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,2 Teile Pigment (β-Phase, mit Spuren α-Phase), das im Kunststoff (PVC) sehr gut dispergierbar ist und transparente und farbstarke Färbungen mit einwandfreier Ausblutechtheit liefert.

### Beispiel 4:

In einen Kunststoffbehälter, der mit 2300 Teilen Stahlkugeln vom Durchmesser 10 mm als Mahlkörper zu 55 Vol.-% gefüllt ist, werden 30 Teile grobkristallines Rohpigment (C.I. Pigment Violet 19, C.I. No. 46500, β-Phase, hergestellt gemäß US-PS 2 969 366) und 1,5 Teile Polyolefinwachs (Fp: 104°C, Molmasse ca. 2000) eingefüllt. Es wird 24 Stunden lang bei 75 % der kritischen Drehzahl auf einem Rolltisch gemahlen. Anschließend wird das Mahlgut von den Mahlkörpern abgesiebt.

In eine Rührwerkskugelmühle (Hersteller: Draiswerke GmbH, Mannheim), die mit 514 Teilen Zirkonoxidperlen vom Durchmesser 0,4 bis 0,6 mm als Mahlkörper gefüllt ist, wird eine Suspension, bestehend aus 90 Teilen Wasser und 10 Teilen des aus der Rollmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet. Man erhält 9,8 Teile Pigment (β-Phase, mit Spuren α-Phase), das im Kunststoff (PVC) sehr gut dispergierbar ist und transparente und farbstarke Färbungen mit einwandfreier Ausblutechtheit liefert.

### Beispiel 5:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 19, C.I. No. 46500, γ-Phase, hergestellt gemäß US-PS 2 969 366) und 1,5 Teile Polyolefinwachs (Fp: 104°C, Molmasse ca. 2000) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,8 Teile Pigment (γ-Phase, mit Spuren α-Phase), das im AM-Lack transparente und farbstarke Lackierungen liefert.

### Beispiel 6:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Red 122, C.I. No. 71145, hergestellt gemäß US-PS 3 793 327) und 1,5 Teile Polyolefinwachs (Fp: 104°C, Molmasse ca. 2000) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0.4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,9 Teile Pigment, das im Kunststoff (PVC) sehr gut dispergierbar ist und farbstarke Färbungen mit einwandfreier Ausblutechtheit liefert.

### Beispiel 7:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Mischkristallrohpigment (bestehend aus 80 % C.I. Pigment Red 122 und 20 % C.I. Pigment Violet 19 hergestellt gemäß US-PS 3 793 327) und 1,5 Teile Polyolefinwachs (Fp: 104°C, Molmasse ca. 2000) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 10,0 Teile Mischkristallpigment, das im Kunststoff (PVC) sehr gut dispergierbar ist und farbstarke Färbungen mit einwandfreier Ausblutechtheit liefert.

### Beispiel 8:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 1,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,4 Teile Pigment, das im Kunststoff (PVC) sehr gut dispergierbar ist und transparente und farbstarke Färbungen mit einwandfreier Ausblutechtheit liefert.

### Beispiel 8a (Vergleichsbeispiel):

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 1,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.
Man erhält 14,9 Teile Pigment, das im Kunststoff (PVC) deckendere und farbschwächere Färbungen liefert als das nach Beispiel 8 hergestellte Pigment.

### Beispiel 8b (Vergleichsbeispiel):

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen grobkristallinem Perylenrohpigment (C.I. Pigment Red 149, C.I. No. 71137, hergestellt gemäß DE-A-1 067 157) und 1,5 Teile Polyolefinwachs (Fp: 104°C, Molmasse ca. 2000) eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet. Man erhält 14,5 Teile Pigment, das im Kunststoff (PVC) deckendere und farbschwächere Färbungen als das nach Beispiel 8 hergestellte Pigment liefert.

### Beispiel 8c (Vergleichsbeispiel):

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 1,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt. Diese Mahlung wird einmal wiederholt.

In eine Rührwerkskugelmühle mit Scheibenrührwerk (Hersteller: Draiswerke GmbH, Mannheim), die mit 1000 Teilen Quarzperlen vom Durchmesser 1 mm als Mahlkörper gefüllt ist, wird eine Suspension, bestehend aus 297,5 Teilen Wasser und 52,5 Teilen des aus der Schwingmahlung erhaltenen Präpigments eindosiert und mit einer Rührwerksumfangsgeschwindigkeit von 10,2 m/s sowie einer spezifischen Leistungsdichte von 0,45 kW pro Liter Mahlraum 1 Stunde lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 51,8 Teile Pigment, das im Kunststoff (PVC) sehr gut dispergierbar ist und deutlich deckendere Färbungen als das nach Beispiel 8 hergestellte Pigment liefert. Transparente Färbungen konnten nicht erhalten werden.

### Beispiel 9:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 178, C.I. No. 71155, hergestellt gemäß DE-A-1 230 946) und 1,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,2 Teile Pigment, das im Kunststoff (PVC) sehr gut dispergierbar ist und farbstarke Färbungen mit einwandfreier Ausblutechtheit liefert.

### Beispiel 10:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 123, C.I. No. 71145, hergestellt gemäß DE-A-1 113 773) und 1,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0.4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 13,8 Teile Pigment, das im Kunststoff (PVC) sehr gut dispergierbar ist und transparente und farbstarke Färbungen mit einwandfreier Ausblutechtheit liefert.

### Beispiel 11:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenmischkristallrohpigment (bestehend aus 90 Mol-% Perylentetracarbonsäure-bis-3',5'-dimethylphenylimid, C.I. Pigment Red 149 und 10 Mol-% Perylentetracarbonsäure-mono-3',5'-dimethylphenylimid-mono-4'-ethoxyphenylimid, hergestellt gemäß DE-OS 3 436 208) und 1,5 Teile Polyolefinwachs (Fp: 104°C, Molmasse ca. 2000) eingefüllt und auf einer Schwingmühle (Typ Vibratom, Hersteller Siebtechnik Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,2 Teile Mischkristallpigment, das im Kunststoff (PVC) sehr gut dispergierbar ist und transparente und farbstarke Färbungen mit einwandfreier Ausblutechtheit liefert. Die Temperaturbeständigkeit in Polyolefin (PE) beträgt 300°C.

### Beispiel 12:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 0,75 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,6 Teile Pigment, das im Kunststoff (PVC) sehr gut dispergierbar ist und transparente und farbstarke Färbungen mit einwandfreier Ausblutechtheit liefert.

### Beispiel 13:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 1,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt. Man erhält 904 Teile Mahlgutsuspension. Sie wird mit 0,9 Teilen Schwefelsäure (96 %ig) angesäuert, auf 80°C geheizt und 3 Stunden bei dieser Temperatur gerührt. Danach wird abgesaugt, mit Wasser neutral gewaschen und bei 80°C getrocknet.
Man erhält 14,4 Teile Pigment, das im Kunststoff (PVC + PE) sehr gut dispergierbar ist und transparente und farbstarke Färbungen mit einwandfreier Ausblutechtheit liefert. Die Wetterechtheit ist sehr gut und die Temperaturbeständigkeit liegt bei <280°C. Mit diesem Pigment lassen sich dünnwandige PE-Folien stippenfrei einfärben. Filterwert: 0,3 bar/g.

### Beispiel 14:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 1,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 5 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,4 Teile Pigment, das im Kunststoff (PVC) sehr gut dispergierbar ist und transparente und farbstarke Färbungen mit einwandfreier Ausblutechtheit liefert.

### Beispiel 15:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 1,5 Teile Esterwachs (Umsetzungsprodukt aus Montansäure und Glycerin, Fp: 86,9°C) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,7 Teile Pigment, das im Kunststoff (PVC) sehr gut dispergierbar ist und transparente und farbstarke Färbungen mit einwandfreier Ausblutechtheit liefert.

### Beispiel 16:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157) und 1,5 Teile Amidwachs (Umsetzungsprodukt aus Stearinsäure und Ethylendiamin, Fp: 151,2°C) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,8 Teile Pigment, das im Kunststoff (PVC) sehr gut dispergierbar ist und transparente und farbstarke Färbungen mit einwandfreier Ausblutechtheit liefert.

### Beispiel 17:

In einen Stahlbehälter, der mit 1400 Teilen Steatitkugeln vom Durchmesser 12 mm als Mahlkörper zu 80 Vol.-% gefüllt ist, werden 30 Teile grobkristallines Perylenrohpigment (C.I. Pigment Red 149, C.I. No. 71137, hergestellt gemäß DE-A-1 067 157), 1,5 Teile Polyolefinwachs (Fp: 104°C, Molmasse ca. 2000), 0,4 Teile Stearylamin und 0,75 Teile Perylen-3,4,9,10-tetracarbonsäure-N,N'-bis-2-sulfoethylimid eingefüllt und auf einer Schwingmühle (Typ Vibratom, Hersteller: Siebtechnik, Mühlheim), 12 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,9 Teile Pigmentzubereitung, die im Kunststoff (PVC) sehr gut dispergierbar ist und transparente und farbstarke Färbungen mit einwandfreier Ausblutechtheit liefert. Die Temperaturbeständigkeit ist sehr gut und liegt bei >300°C.

### Beispiel 18:

In einen Stahlbehälter, der mit 1400 Teilen Steatitkugeln vom Durchmesser 12 mm als Mahlkörper zu 80 Vol.-% gefüllt ist, werden 50 Teile grobkristallines Perylenrohpigment (C.I. Pigment Red 149, C.I. No. 71137, hergestellt gemäß DE-A-1 067 157) und 2,5 Teile Polyolefinwachs (Fp: 104°C, Molmasse ca. 2000) eingefüllt und auf einer Schwingmühle (Typ Vibratom, Hersteller: Siebtechnik, Mühlheim), 8 Stunden bei 1400 Umdrehungen pro Minute, Schwingkreis 4 mm, gemahlen. Danach wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser und 15 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 14,7 Teile Pigment, das im Kunststoff (PVC) sehr gut dispergierbar ist und transparente und farbstarke Färbungen mit einwandfreier Ausblutechtheit liefert.

### Beispiel 19:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 23, C.I. No. 51319, hergestellt gemäß BIOS Final Report 960, mit 25 % Salz aus der Synthese) und 1,2 Teile oberflächenaktives Mittel (Umsetzungsprodukt aus 1 Mol Triethanolamin und 3 Mol Ölsäurechlorid) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,8 Teile Pigment, das im AM-Lack transparente und farbstarke Lackierungen liefert.

### Beispiel 20:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 23, C.I. No. 51319, hergestellt als grobkristallines Rohpigment gemäß BIOS Final Report 960, Seite 75; mit 25 % Salz aus der Synthese) und 1,1 Teile oberflächenaktives Mittel (Fettsäurepolyglykolether, auf Basis von Cocosfettalkohol, vorwiegend C₁₂-C₁₄-Alkohol, gesättigt, mit 10 Mol Ethylenoxid) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen des aus der Schwingmahlung erhaltenen Präpigments eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,8 Teile Pigment, das im AM-Lack transparente und farbstarke Lackierungen liefert.

### Beispiel 21:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 23, C.I. No. 51319, hergestellt als grobkristallines Rohpigment gemäß BIOS Final Report 960, Seite 75; mit 25 % Salz aus der Synthese) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser, 13,3 Teilen des aus der Schwingmahlung erhaltenen Präpigments und 1 Teil 2-Ethylhexansäure, eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 10,8 Teile Pigment, das im AM-Lack transparente und farbstarke Lackierungen liefert. Die Rheologie wird mit 1-2 bewertet. Die Viskosität beträgt 6,4 s und die Glanzmessung ergibt den Wert 41. Im HSS-Lack werden transparente und farbstarke Lackierungen erhalten. Die Rheologie wird mit 3 bewertet. Die Viskosität beträgt 9,3 s und die Glanzmessung ergibt den Wert 50.

### Beispiel 22:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 23, C.I. No. 51319, hergestellt als grobkristallines Rohpigment gemäß BIOS Final Report 960, Seite 75; mit 25 % Salz aus der Synthese) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser, 13,6 Teilen des aus der Schwingmahlung erhaltenen Präpigments und 1 Teil oberflächenaktives Mittel (Umsetzungsprodukt aus Cocosfettsäurepolyethylenglykolester, Polyglykoldicarbonsäure und Dihydroabietylamin), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 9,8 Teile Pigment, das im Kunststoff (PVC) gut dispergierbar ist und farbstarke Färbungen liefert.

### Beispiel 22a (Vergleichsbeispiel):

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines Rohpigment (C.I. Pigment Violet 23, C.I. No. 51319, hergestellt als grobkristallines Rohpigment gemäß BIOS Final Report 960, Seite 75; mit 25 % Salz aus der Synthese) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt. Diese Mahlung wird einmal wiederholt.

In eine Rührwerkskugelmühle mit Scheibenrührwerk (Hersteller: Draiswerke GmbH, Mannheim), die mit 1160 Teilen Quarzperlen vom Durchmesser 1 mm als Mahlkörper gefüllt ist, wird eine Suspension, bestehend aus 360 Teilen Wasser, 54 Teilen des aus der Schwingmahlung erhaltenen Präpigments und 4 Teilen oberflächenaktives Mittel (Umsetzungsprodukt aus Cocosfettsäurepolyethylenglykolester, Polyglykoldicarbonsäure und Dihydroabietylamin), eindosiert und mit einer Rührwerksumfangsgeschwindigkeit von 10,2 m/s sowie einer spezifischen Leistungsdichte von 0,45 kW pro Liter Mahlraum 1 Stunde lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.
Man erhält 51,8 Teile Pigment, das im Kunststoff (PVC) deutlich farbschwächer ist als das nach Beispiel 22 hergestellte Pigment.

## Patentansprüche

1. Verfahren zur Feinverteilung von polycyclischen organischen Rohpigmenten, dadurch gekennzeichnet, daß man die grobkristallinen Rohpigmente zunächst einer Trockenmahlung unterwirft und die dabei erhaltenen feinteiligen Präpigmente in wäßriger Suspension auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner oder gleich 1 mm naßvermahlt.

2. Verfahren gemäß Anspruch 1 dadurch gekennzeichnet, daß man die Trockenmahlung bei einem Mahlgutfüllgrad von weniger als 250 g Rohpigment pro Liter freiem Volumen der Mahlkörperschüttung, vorzugsweise bei 50 bis 150 g/l, durchführt.

3. Verfahren gemäß Anspruch 1 oder 2 dadurch gekennzeichnet, daß die Trockenmahlung auf einer Schwingmühle mit einem Mahlkörperfüllgrad von über 60 Vol.-% durchgeführt wird.

4. Verfahren gemäß Anspruch 1 oder 2, dadurch gekennzeichnet, daß die Trockenmahlung auf einer Rollmühle mit einem Mahlkörperfüllgrad von 40 bis 60 Vol.-% durchgeführt wird.

5. Verfahren nach einem der Ansprüche 1 bis 4, dadurch gekennzeichnet, daß die Trockenmahlung in Gegenwart eines Mahlhilfsmittels in einer Menge von 0,1 bis 10 Gew.-%, vorzugsweise 2,5 bis 7,5 Gew.-%, bezogen auf das grobkristalline Rohpigment, durchgeführt wird.

6. Verfahren gemäß Anspruch 5, dadurch gekennzeichnet, daß das Mahlhilfsmittel ein Wachs, ein oberflächenaktives Mittel oder eine Mischung davon ist.

7. Verfahren nach Anspruch 6, dadurch gekennzeichnet, daß das oberflächenaktive Mittel ein Fettsäuretaurid, Fettsäure-N-methyl-taurid, Fettsäureisethionat, Alkylbenzolsulfonant, Alkylnaphthalinsulfonat, Alkylphenolpolyglykolethersulfat, Fettalkoholpolyglykolethersulfat, eine Fettsäure, Harzsäure, ein alkalilösliches Harz, ein Fettaminoxethylat, ein Fettamin, ein Fettalkoholpolyglykolether, ein Fettsäurepolyglykolester oder ein Alkylphenolpolyglykolether ist.

8. Verfahren nach Anspruch 6, dadurch gekennzeichnet, daß das Wachs ein Polyolefinwachs ist.

9. Verfahren gemäß mindestens einem der Ansprüche 1 bis 8, dadurch gekennzeichnet, daß man bei der Naßmahlung Mahlkörper vom Durchmesser 0,2 bis 0,8 mm, vorzugsweise 0,3 bis 0,5 mm, einsetzt.

10. Verfahren gemäß mindestens einem der Ansprüche 1 bis 9, dadurch gekennzeichnet, daß die Präpigmentkonzentration im Mahlgut der Naßmahlung weniger als 40 Gew.-%, vorzugsweise 10 bis 35 Gew.-%, beträgt.

11. Verfahren gemäß mindestens einem der Ansprüche 1 bis 10, dadurch gekennzeichnet, daß man grobkristalline Rohpigmente aus der Gruppe der Chinacridone, Perylene oder Dioxazine einsetzt.

12. Verwendung eines nach einem oder mehreren der Ansprüche 1 bis 11 hergestellten organischen polycyclischen Pigments als Farbmittel zum Pigmentieren von Lacken, Druckfarben und Kunststoffen.

13. Verwendung nach Anspruch 12, dadurch gekennzeichnet, daß der Kunststoff ein Celluloseether oder -ester, ein natürliches Harz, Polymerisationsharz oder Kondensationsharz, Alkydharz, Acrylharz, Phenoplast, Polycarbonat, Polyolefin, Polyvinylchlorid, Polyacrylnitril, Polyacrylsäureester, Polyamid, Polyurethan, Polyester, Gummi, Casein, Silikon und Silikonharz, oder eine Mischung davon ist.

14. Verwendung nach Anspruch 12 oder 13, dadurch gekennzeichnet, daß der Kunststoff eine plastische Masse, Schmelze oder Spinnlösung ist.
